# EUROPEAN PATENT APPLICATION

(11) **EP 4 333 244 A1**
(43) Date of publication of application: **06.03.2024**
(21) Application number: 22848698.1
(22) Date of filing: 29.07.2022
(51) Int. Cl.: H02J 7/00, H01M 10/613, H01M 10/615, H01M 50/112

(54) **CHARGING SYSTEM AND CHARGING DEVICE FOR BATTERY PACK**

(30) Priority: 30.07.2021 CN 202110872964
(71) Applicant: BYD Company Limited, Shenzhen, Guangdong 518118 (CN)
(72) Inventor: GUO, Shu, Shenzhen, Guangdong 518118 (CN)
(74) Representative: DehnsGermany Partnerschaft von Patentanwälten
(86) International application number: PCT/CN2022/109121
(87) International publication number: WO 2023/006094

(57) **Abstract**

Disclosed is a battery pack (4) charging system, including a charging base (1) and a cooling structure. The charging base (1) is arranged at a charging station, and the charging base (1) is adapted to be electrically connected to a battery pack (4), so that the battery pack (4) is charged when the battery pack (4) is placed on the charging base (1). The cooling structure is arranged on the charging base (1). By arranging a charging apparatus and charging system that can carry the charging base (1) for the battery pack (4) and charge the battery pack (4) at the charging station, the battery pack (4) is charged without requiring a vehicle to wait for a long time, thereby meeting heating and heat dissipation requirements of the charging system.

## Description

### CROSS-REFERENCE TO RELATED APPLICATIONS

The present disclosure claims priority to Chinese Patent Application No. 202110872964.5, entitled "BATTERY PACK CHARGING SYSTEM AND CHARGING APPARATUS" and filed by BYD Co., Ltd. on July 30, 2021.

### FIELD

The present disclosure relates to the field of battery technologies, and more specifically, to a battery pack charging system and a charging apparatus.

### BACKGROUND

With the development of the society, in order to save energy and reduce the emission of environmental harmful substances, a growing number of fuel vehicles/gasoline vehicles are replaced by electric vehicles, and the quantity of electric vehicles continues to increase. At present, most new-energy electric vehicles use fixed charging piles for charging. Charging at existing charging piles may be either alternating-current charging or direct-current charging, but regardless of which manner is used, the charged vehicle can only be driven after the charging is completed. When the vehicle requires fast charging, the electric vehicle needs to use a cooling system with greater heat dissipation power. On one hand, the cost of the entire vehicle is increased, and the space of the entire vehicle is occupied; on the other hand, the heat dissipation structure of the battery system becomes more complex. At low temperatures, in order to meet the fast charging requirement of the electric vehicle, more electric power needs to be increased to meet the heating rate of the battery system, resulting in risks of increased energy consumption and reduced travelable mileage of the electric vehicle.

### SUMMARY

The present disclosure is intended to resolve one of technical problems in the related art at least to some extent.

Therefore, the present disclosure provides a battery pack charging system. The battery pack charging system can charge a battery pack without requiring a vehicle to wait for a long time.

The present disclosure further provides a charging apparatus.

The battery pack charging system according to the present disclosure includes: a charging base, the charging base being arranged at a charging station, and the charging base being adapted to be electrically connected to a battery pack, so that the battery pack is charged when the battery pack is placed on the charging base; and a cooling structure, the cooling structure being arranged on the charging base, and the cooling structure being configured to cool the battery pack.

In the battery pack charging system in the embodiments of the present disclosure, the battery pack is separated from a vehicle, and by arranging a charging apparatus and charging system that can carry the charging base for the battery pack and charge the battery pack at the charging station, the battery pack is charged without requiring the vehicle to wait for a long time, and the vehicle can be driven freely when the battery pack is charged. Further, when a battery system requires fast charging, the charging base quickly meets the battery system's fast charging and heat dissipation requirements by controlling heat dissipation power of a cooling system; and similarly, at low temperatures, relatively great heating power is provided to meet the battery system's heating requirement.

The charging apparatus according to the present disclosure is adapted to charge a battery pack, and includes a charging base, the charging base being arranged at a charging station, and the charging base being provided with a charging interface for charging the battery pack, the charging interface being adapted to be electrically connected to the battery pack, so that the battery pack is charged through the charging interface when the battery pack is placed on the charging base.

Additional aspects and advantages of the present disclosure will be partially given in the following description, some of which will become apparent from the following description or may be learned from practices of the present disclosure.

### BRIEF DESCRIPTION OF THE DRAWINGS

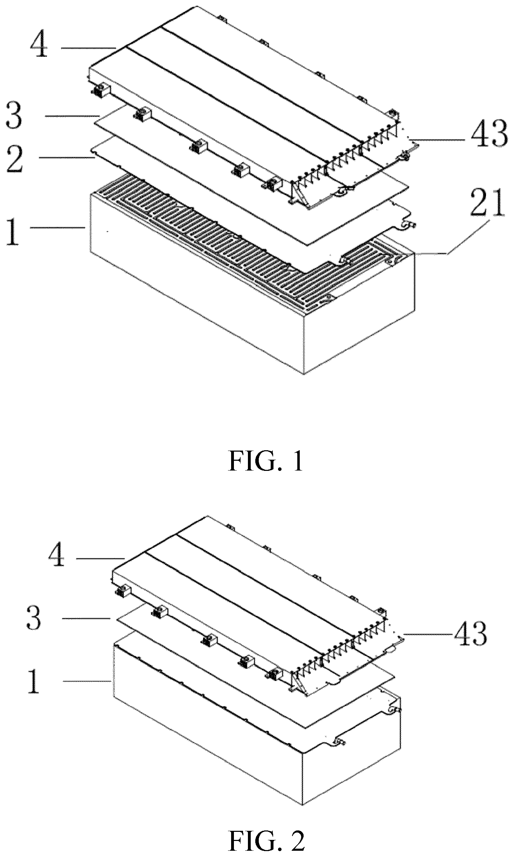

FIG. 1 is a schematic structural diagram of a battery pack charging system according to an embodiment of the present disclosure;
FIG. 2 is a schematic structural diagram of a battery pack charging system according to still another embodiment of the present disclosure;
FIG. 3 is a schematic structural diagram of an arrangement manner of a cold plate and a heating plate of a battery pack in a battery pack charging system according to another embodiment of the present disclosure;
FIG. 4 is a schematic structural diagram of a battery pack charging system according to another embodiment of the present disclosure;
FIG. 5 is a schematic structural diagram of an arrangement manner of a cold plate and a heating plate of a battery pack in a battery pack charging system according to another embodiment of the present disclosure;
FIG. 6 is a schematic structural diagram of a battery pack according to an embodiment of the present disclosure; and

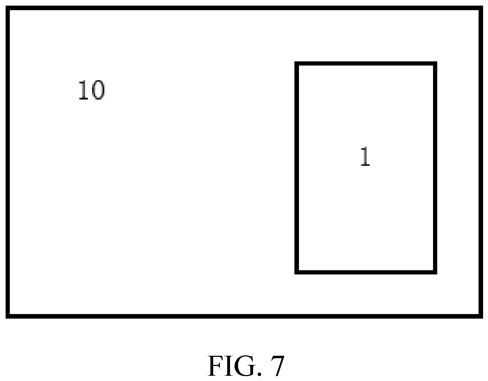

FIG. 7 is a schematic diagram of a charging apparatus according to an embodiment of the present disclosure.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and are intended to explain the present disclosure, and should not be construed as a limitation on the present disclosure.

A battery pack charging system of the present disclosure is described below in detail with reference to the accompanying drawings. The battery pack charging system provided in the embodiments of the present disclosure includes a battery pack 4, a charging base 1, and a cooling structure. The battery pack 4 includes a box 41 and a battery unit, and the battery unit is placed in the box 41. The charging base 1 is arranged at a charging station, and the charging base 1 is adapted to be electrically connected to the battery pack 4, so that the battery pack 4 is charged when the battery pack 4 is placed on the charging base 1. The cooling structure is arranged on the charging base 1, and the cooling structure is configured to cool the battery pack 4.

In the battery pack charging system in this embodiment of the present disclosure, the battery pack 4 is separated from a vehicle, and by arranging a charging apparatus and charging system that can carry the charging base 1 of the battery pack 4 and charge the battery pack 4 at the charging station, the battery pack 4 is charged without requiring the vehicle to wait for a long time, and the vehicle can be driven freely when the battery pack 4 is charged. In addition, the cooling structure is arranged to dissipate heat of the battery pack 4 to ensure charging safety.

The cooling structure in this embodiment of the present disclosure may be directly mounted on the charging base, and the cooling structure is connected to the box through thermal conductive glue or a thermal conductive pad, thereby cooling or heating the battery box. A flow channel plate may alternatively be directly formed on the charging base, which is connected to a flat plate of the battery box through structural sealant, to form a flow channel cavity, thereby cooling or heating the battery system. For example, a groove 21 of a cooling flow channel is provided on the charging base 1.

When the charging base is arranged at the charging station and the flow channel plate is arranged on the charging base, in the charging process of the battery pack, a cooling system will simultaneously act on the battery pack to cool the battery pack. That is, no cooling system is arranged on the battery pack or the battery pack is cooled on one side.

Specifically, a groove 21 may be formed by stamping on the surface of the charging base 1. A bottom portion of the battery pack 4 may be a flat plate or be provided with a protrusion. In this way, the bottom portion of the battery pack 4 may cooperate with the groove 21 to form a flow channel, thereby heating or cooling the battery pack 4 through the flow channel.

In addition, the charging base 1 may alternatively be arranged separately from the cooling structure. For example, the battery pack charging system further includes a cold plate 2, the cold plate 2 includes a cooling structure, and the cold plate 2 is connected to the charging base 1. In this case, a cooling flow channel may be provided on the cold plate 2. For example, the cooling structure includes a protrusion, and the bottom portion of the battery pack 4 is a flat plate. In this way, the bottom portion of the battery pack 4 cooperates with the protrusion to form a flow channel, thereby heating or cooling the battery pack 4 through the flow channel.

The cooling system may include two arrangement forms. The first manner is that the cooling system is a post-mounted structure, and is formed by a battery pack 4, a cold plate 2, and a charging base 1 in cooperation. The second manner is that a structural plate on the battery pack 4 uses one substrate in cooling plates (including a stamping substrate and a flow channel substrate), the other substrate is arranged on the charging base 1, and a flow channel is formed through cooperation of the two substrates (that is, the stamping substrate and the flow channel substrate).

The cooling structure in this embodiment of the present disclosure and the charging base 1 may be integrally formed, or may be arranged separately. This is not limited in the present disclosure, provided that the arrangement of the cooling structure can cool the battery pack 4. When the cooling structure and the charging base 1 are integrally formed, the cooling structure is arranged at the charging station. The battery pack 4 may not have a cooling structure. Cooling and heat dissipation of the battery pack 4 on the vehicle may be achieved through the specific structural design of the battery pack 4. When the cooling structure is arranged separately from the charging base 1, the cooling structure may alternatively be a part of the battery pack 4 mounted on the vehicle, or may be a part of the cold plate 2 mounted on the charging base 1. The arrangement of the cooling structure in this embodiment of the present disclosure is not limited, and designs that can achieve the purpose of cooling all fall within the protection scope of the present disclosure. For example, the cooling structure may be formed through a design of a groove 21 or a protrusion.

In this embodiment of the present disclosure, the cooling structure on the charging base 1 may be a liquid cooling, direct cooling, a semiconductor refrigeration system, or the like, and the cooling power and heat exchange capability may be changed according to needs, to meet different heat dissipation requirements of the box 41 of the battery pack 4. For example, a heat exchange area ofthe battery pack 4 may be changed by adjusting flows of a water inlet and a water outlet or changing the quantity of spliced cold plates 2.

In order to achieve better fixation between the charging base 1 and the battery pack 4, mounting portions that cooperate with each other may be arranged on the battery pack 4 and the charging base 1, for example, providing threaded holes for screw-fixed connection. The box 41 of the battery pack 4 in this embodiment of the present disclosure may not be provided with a cooling plate. When the battery pack 4 needs to be charged, the battery pack 4 may be disassembled from the vehicle and placed on the charging base 1 or mounted on the charging base 1, and charging and cooling are started, thereby achieving cooling when the battery pack 4 is charged.

The battery pack charging system in this embodiment of the present disclosure may not only include a cooling structure, but also include a heating or protective structure for heating or protecting the battery pack 4, for example, a heating plate 3 or a protective plate 5. Specifically, the heating plate 3 and the protective plate 5 may be integrally formed with the battery pack 4, or the components may be designed separately to achieve fixed connection. For example, the battery pack charging system further includes at least one of a heating plate 3 or a protective plate 5. In order to fully heat or protect the battery pack 4, the following settings may be made: a size of the heating plate 3 is larger than or equal to a size of the battery pack 4, and a size of the protective plate 5 is larger than or equal to the size of the battery pack 4.

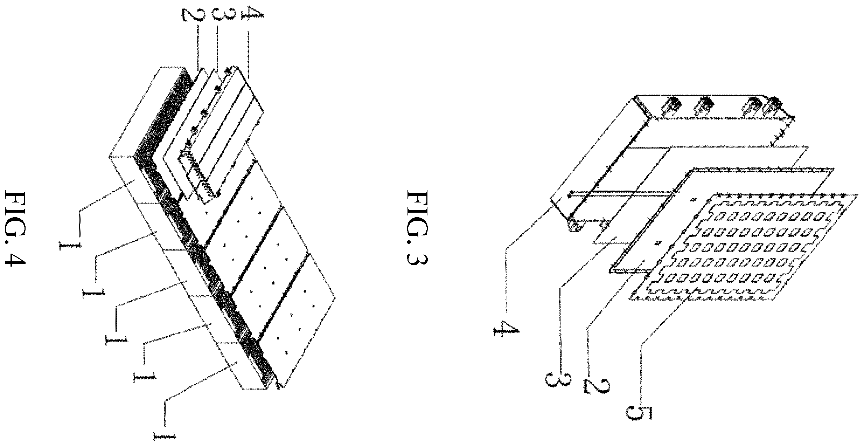

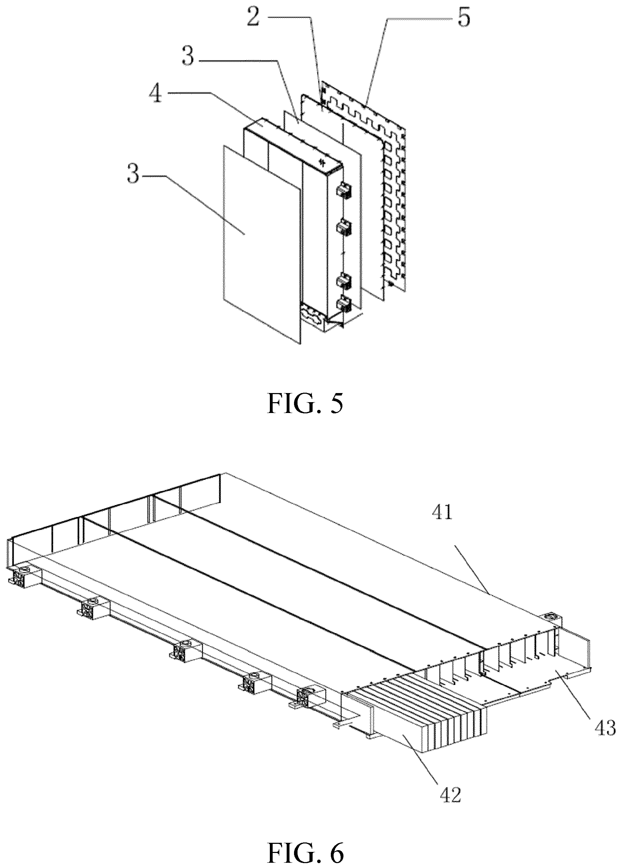

In this embodiment of the present disclosure, in order to fully dissipate heat of the battery pack 4, a heating plate may further be arranged between the box 41 of the battery pack 4 and the charging base 1. The heating plate may be in contact with the battery box through thermal gel or a thermal conductive pad. The protective plate 5, the heating plate 3, and the cold plate 2 may all exist and be arranged on one or two sides of the battery pack 4, or may be selectively arranged. This is not limited in the present disclosure. As shown in FIG. 3, the cold plate 2, the heating plate 3, and the protective plate 5 may be arranged on one side of the charging base 1 at which the battery pack 4 is located, or on another side of the battery pack 4 opposite to the charging base 1; alternatively, the heating plate 3 may be arranged on one side of the battery pack 4 and the protective plate 5 may be arranged on the other side; alternatively, heating plates 3 may be provided on two sides of the battery pack 4 as shown in FIG. 5.

Arranging a protective plate on one side of the battery pack can prevent damage to the battery pack during encountering of irritants or faults in the driving process when the battery pack is mounted on the vehicle, to protect the battery pack.

For working conditions in which the battery pack 4 needs to be heated, the existing cold plate 2 may be used to heat the battery pack 4 in a liquid heat manner. The heating plate 3 may alternatively heat the battery pack 4 by using thermal conductive gel, a thermal conductive pad, or other high-temperature-resistant thermal conductive interface materials, or the battery pack 4 may be heated by replacing the heating plate 3 with other materials such as a heating film, a direct heating plate, or PTC.

In order to achieve effective charging, a size of the charging base 1 is larger than or equal to the size of the battery pack 4.

The size of the cold plate 2 in this embodiment of the present disclosure is larger than or equal to the size of the battery pack 4, so that the battery pack 4 can be fully cooled and the charging and heat dissipation of battery packs 4 of different sizes can be achieved. The cold plate 2 may be mounted on the charging base 1, and the distance between the cold plate 2 and an edge of the charging base 1 is greater than or equal to 2 mm, so that sufficient cooling and heat dissipation of the rechargeable battery pack 4 can be achieved.

In an embodiment of the present disclosure, the battery unit includes at least one battery core assembly 42, and each of the at least one battery core assembly 42 includes at least one electrode core string. Based on the electrode core string used in this embodiment of the present disclosure, the existing fixed structures of the battery module such as the battery casing, end plates, side plates, and fasteners are omitted, thereby improving the space utilization of the battery pack 4, reducing the weight of the battery pack 4, and increasing the energy density of the battery pack 4. The battery pack 4 in this embodiment of the present disclosure has a simple structure and helps to reduce production costs.

In an embodiment of the present disclosure, the box 41 includes a box body, the box body includes a top plate and a bottom plate 43 that are oppositely arranged in a first direction, and the first direction is a height direction of the box 41. Multiple structural beams are arranged between the top plate and the bottom plate 43, and each of the multiple structural beams connects the top plate and the bottom plate 43. The multiple structural beams divide the interior of the box 41 into multiple accommodating cavities, and each of the multiple accommodating cavities is configured to accommodate one battery core assembly 42. With such a design, an "I"-shaped structure between the structural beams, the top plate, and the bottom plate 43 can be formed. This structure has relatively high lightness and rigidity, so as to meet performance requirements such as load-bearing, anti-collision, and anti-extrusion of the box 41 of the battery pack.

The single module of the box 41 of the battery pack may be designed as a square-shaped groove structure, to form a placing-type cavity for the battery core assembly 42. The single module of the box 41 of the battery pack is integrally formed through extrusion by using an aluminum profile, and several structural beams are designed inside, to form a square-shaped groove cavity. The quantity of cavities may be adjusted according to the design requirements of the battery core assembly 42 in the battery pack. With such a design, structures such as the tray and side plates of the battery pack 4 can be omitted, and the box 41 can be directly divided. The structure of the box 41 is a square-shaped cavity, and the heat transfer paths from each cavity to the cooling structure are basically the same, so that the cooling structure can have a uniform heat exchange capability for all battery cores of the entire battery pack 4.

In an embodiment of the present disclosure, the box body is integrally formed, or the box body and the structural beams are integrally formed. Integral formation can ensure the uniformity of heat dissipation and heating of the battery pack, that is, the battery heat is quickly and uniformly conducted or exported through the metal structure.

In an embodiment of the present disclosure, a wall thickness of the box 41 is greater than or equal to 2 mm, and the box 41 is made of a metal material. For example, the box body 41 may be made of an aluminum material. On the one hand, the wall thickness of the box can ensure the structural strength, and on the other hand, the wall thickness can also play a role in giving a uniform temperature.

The size of the charging base 1 may be larger than the size of multiple battery packs 4. Electrical connection interfaces and multiple cooling structures that match the charging of the multiple battery packs 4 may be arranged in series or in parallel on the charging base 1, so that one charging base 1 can simultaneously charge the multiple battery packs 4. In other words, a manner of connection in series or in parallel may be used for charging bases 1, and the charging bases 1 and the battery packs 4 are in one-to-one correspondence, for example, the manner in which five charging bases 1 are connected in series in FIG. 4. Such a design of the charging bases 1 can save space for the charging station.

An embodiment of the present disclosure provides a charging apparatus 10. The charging apparatus 10 is adapted to charge a battery pack, and the charging apparatus 10 includes a charging base 1. The charging base 1 is arranged at a charging station, and the charging base 1 is provided with a charging interface for charging the battery pack 4. The charging interface is adapted to be electrically connected to the battery pack 4, so that the battery pack 4 is charged through the charging interface when the battery pack 4 is placed on the charging base 1. The charging base 1 in the charging apparatus 10 in this embodiment of the present disclosure may be the charging base 1 in the battery pack charging system in the foregoing embodiment. For the specific solution of the charging base 1, reference may be made to the foregoing description, and details are not described herein again.

In the description of the present disclosure, it should be understood that, orientation or position relationships indicated by terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are orientation or position relationship shown based on the accompanying drawings, and are merely used for describing the present disclosure and simplifying the description, rather than indicating or implying that the mentioned apparatus or element should have a particular orientation or be constructed and operated in a particular orientation, and therefore, should not be construed as a limitation to the present disclosure.

In addition, the terms "first" and "second" are used for descriptive purposes only and are not to be construed as indicating or implying relative importance or implicitly indicating the quantity of technical features indicated. Therefore, a feature limited by "first" or "second" may explicitly or implicitly include one or more of the features. In the description of the present disclosure, "a plurality of" means two or more unless it is specifically defined otherwise.

In the present disclosure, unless expressly stated and defined otherwise, the terms such as "mounting", "connected", "connection", and "fixed" are to be construed broadly, for example, as fixed connection, detachable connection or integral connection, as mechanical connection or electrical connection, and as direct connection or indirect connection via an intermediary or communication inside two elements or interaction between two elements. A person of ordinary skill in the art may understand the specific meanings of the foregoing terms in the present disclosure according to specific situations.

In the present disclosure, unless explicitly specified or limited otherwise, a first feature "on" or "under" a second feature may be the first feature in direct contact with the second feature, or the first feature in indirect contact with the second feature by using an intermediate medium. In addition, that the first feature is "above", "over", or "on" the second feature may indicate that the first feature is directly above or obliquely above the second feature, or may merely indicate that a horizontal height of the first feature is higher than that of the second feature. That the first feature is "below", "under", and "beneath" the second feature may indicate that the first feature is directly below or obliquely below the second feature, or may merely indicate that the horizontal height of the first feature is lower than that of the second feature.

In the description of this specification, the description of the reference terms such as "an embodiment", "some embodiments", "example", "specific example", or "some examples" means that the specific features, structures, materials or characteristics described with reference to the embodiment or example are contained in at least one embodiment or example of the present disclosure. In this specification, exemplary description of the foregoing terms does not necessarily refer to a same embodiment or example. Besides, the specific features, the structures, the materials, or the characteristics that are described may be combined in proper manners in any one or more embodiments or examples. In addition, a person skilled in the art may integrate or combine different embodiments or examples described in the specification and features of the different embodiments or examples provided that they are not contradictory to each other.

Although the embodiments of the present disclosure are shown and described above, it may be understood that the foregoing embodiments are examples, and cannot be understood as limitations to the present disclosure. A person of ordinary skill in the art may make changes, modifications, replacements, and variations to the foregoing embodiments without departing from the scope of the present disclosure.

## Claims

1. A battery pack charging system, comprising:
a charging base, the charging base being arranged at a charging station, and the charging base being adapted to be electrically connected to a battery pack, so that the battery pack is charged when the battery pack is placed on the charging base; and
a cooling structure, the cooling structure being arranged on the charging base, and the cooling structure being configured to cool the battery pack.

2. The battery pack charging system according to claim 1, wherein the charging base and the cooling structure are integrally formed.

3. The battery pack charging system according to claim 1, further comprising:
a cold plate, the cold plate being connected to the charging base, and the cold plate comprising the cooling structure.

4. The battery pack charging system according to claim 2 or 3, wherein a size of the cold plate is larger than or equal to a size of the battery pack.

5. The battery pack charging system according to any one of claims 1 to 4, wherein the cooling structure comprises a groove, a bottom portion of the battery pack is a flat plate or is provided with a protrusion, and the bottom portion of the battery pack is adapted to cooperate with the groove to form a flow channel.

6. The battery pack charging system according to any one of claims 1 to 5, wherein the cooling structure comprises a protrusion, the bottom portion of the battery pack is a flat plate, and the bottom portion of the battery pack is adapted to cooperate with the protrusion to form a flow channel.

7. The battery pack charging system according to any one of claims 1 to 6, further comprising at least one of a heating plate or a protective plate, a size of the heating plate being larger than or equal to the size of the battery pack, and a size of the protective plate being larger than or equal to the size of the battery pack.

8. The battery pack charging system according to claim 7, wherein the heating plate is at least one of a heating film or a direct heating plate.

9. The battery pack charging system according to any one of claims 1 to 8, wherein a size of the charging base is larger than or equal to the size of the battery pack.

10. The battery pack charging system according to any one of claims 1 to 9, further comprising a battery pack, the battery pack comprising a box and a battery unit, the battery unit being placed in the box.

11. The battery pack charging system according to claim 10, wherein the battery unit comprises at least one battery core assembly, and each of the at least one battery core assembly comprises at least one electrode core string.

12. The battery pack charging system according to claim 10 or 11, wherein the box comprises a box body, the box body comprises a top plate and a bottom plate, the top plate and the bottom plate are oppositely arranged in a first direction, the first direction is a height direction of the box, a plurality of structural beams are arranged between the top plate and the bottom plate, each of the plurality of structural beams connects the top plate and the bottom plate, the plurality of structural beams divide the interior of the box into a plurality of accommodating cavities, and each of the plurality of accommodating cavities is configured to accommodate one battery core assembly.

13. The battery pack charging system according to claim 12, wherein the box body is an integrally formed component, or the box body and the structural beams are integrally formed.

14. The battery pack charging system according to any one of claims 10 to 13, wherein a wall thickness of the box is greater than or equal to 2 mm, and the box is made of a metal material.

15. A charging apparatus, adapted to charge a battery pack, and comprising a charging base, the charging base being arranged at a charging station, and the charging base being provided with a charging interface for charging the battery pack, the charging interface being adapted to be electrically connected to the battery pack, so that the battery pack is charged through the charging interface when the battery pack is placed on the charging base.
